# EUROPEAN PATENT APPLICATION

(11) **EP 4 360 905 A1**
(43) Date of publication of application: **01.05.2024**
(21) Application number: 22828041.8
(22) Date of filing: 31.03.2022
(51) Int. Cl.: B60C 1/00, C08K 7/02, C08L 7/00, C08L 9/00, C08L 57/02, C08K 3/04, C08K 3/26, C08K 3/36

(54) **VULCANIZED RUBBER COMPOSITION AND TIRE**

(30) Priority: 22.06.2021 JP 2021103664
(71) Applicant: BRIDGESTONE CORPORATION, Chuo-ku Tokyo 104-8340 (JP)
(72) Inventor: YOSHIHARA Taiga, Tokyo 104-8340 (JP); SUZUKI Kenji, Tokyo 104-8340 (JP)
(74) Representative: Marks & Clerk LLP
(86) International application number: PCT/JP2022/016942
(87) International publication number: WO 2022/270122

(57) **Abstract**

Provided is a vulcanized rubber composition with excellent on-ice performance without degrading other performances such as wear resistance. In order to solve the above problem, the vulcanized rubber composition of the present disclosure is a vulcanized rubber composition obtainable by vulcanizing a rubber composition comprising a rubber component and a resin component, wherein the rubber component contains an isoprene skeleton rubber and at least one selected from a styrene-butadiene rubber and a butadiene rubber, the resin component has a softening point higher than 110 °C and a polystyrene-equivalent weight-average molecular weight of 200 to 1600 g/mol, and having a plurality of pores.

## Description

### TECHNICAL FIELD

This disclosure relates to a vulcanized rubber composition and a tire.

### BACKGROUND

In order to improve the braking and driving performance of tires on icy and snowy roads (hereinafter, referred to as "on-ice performance"), research has been conducted especially on tire treads. On the icy and snowy roads, water film is easily generated due to frictional heat between the tires and the icy and snowy roads, and this water film reduces the coefficient of friction between the tires and the icy and snowy roads. Therefore, to improve the on-ice performance in tires, it is necessary to improve the water film removal capability, edge effect and stud effect of the tire treads.

It is known to provide the tire treads with water film removal capability by providing micro drainage grooves on tire tread surfaces, which eliminate the water film and increase the coefficient of friction of tires on the icy and snowy roads. However, while the micro drainage grooves on the tire tread surfaces can improve the on-ice performance of tires in the early stages of use, they reduce the wear resistance of tires and make it difficult to sustain the on-ice performance.

Further, technologies for enhancing the on-ice performance of tires include the one for incorporating short fibers or the like into a rubber composition. For example, Patent Document 1 discloses a technology that improves drainage performance when the rubber composition is used in tires by incorporating a surfactant including at least one selected from the group consisting of a fatty acid polyhydric alcohol ester, a nonionic ester surfactant, an alkanolamide surfactant, and a sulfonic acid surfactant, and short fibers in that rubber composition.

### CITATION LIST

### Patent Literature

PTL 1: WO2017/69273

### SUMMARY

### (Technical Problem)

The technology disclosed in the Patent Document 1 makes it possible to improve the on-ice performance to some extent. However, from the viewpoint of vehicle safety, etc., further improvement in the on-ice performance is desired without degrading other properties such as wear resistance.

Therefore, the purpose of the present disclosure is to provide a vulcanized rubber composition with excellent on-ice performance without degrading other performances such as wear resistance. Another purpose of the present disclosure is to provide a tire with excellent on-ice performance without degrading other performances such as wear resistance.

### (Solution to Problem)

The inventors have made a diligent effort to further improve the on-ice performance of vulcanized rubber composition. As a result, they have found that the on-ice performance can also be greatly improved without degrading other properties such as wear resistance, by incorporating a resin component with a specific softening point and weight-average molecular weight, and forming a plurality of pores, in addition to using an isoprene skeleton rubber and at least one selected from a styrene-butadiene rubber and a butadiene rubber as a rubber component of the vulcanized rubber composition.

That is, the vulcanized rubber composition of the present disclosure is a vulcanized rubber composition obtainable by vulcanizing a rubber composition comprising a rubber component and a resin component, wherein the rubber component contains an isoprene skeleton rubber and at least one selected from a styrene-butadiene rubber and a butadiene rubber, the resin component has a softening point higher than 110 °C and a polystyrene-equivalent weight-average molecular weight of 200 to 1600 g/mol, and having a plurality of pores.

The aforementioned configuration enables excellent on-ice performance without degrading other performances such as wear resistance.

The tire of the present disclosure is a tire wherein the vulcanized rubber composition described above is used for a tread portion.

The aforementioned configuration enables excellent on-ice performance without degrading other performances such as wear resistance.

### (Advantageous Effect)

The present disclosure can provide a vulcanized rubber composition with excellent on-ice performance without degrading other performances such as wear resistance. Also, this disclosure can provide a tire with excellent on-ice performance without degrading other performances such as wear resistance.

### BRIEF DESCRIPTION OF THE DRAWINGS

In the accompanying drawings:
FIG. 1 schematically illustrates a plurality of pores in a vulcanized rubber composition according to one embodiment of this disclosure; and
FIG.2 schematically illustrates a cross-section of the pores present in the vulcanized rubber composition.

### DETAILED DESCRIPTION

The following is a description of embodiment(s) of the present disclosure, with drawings where necessary.

### <Vulcanized rubber composition>

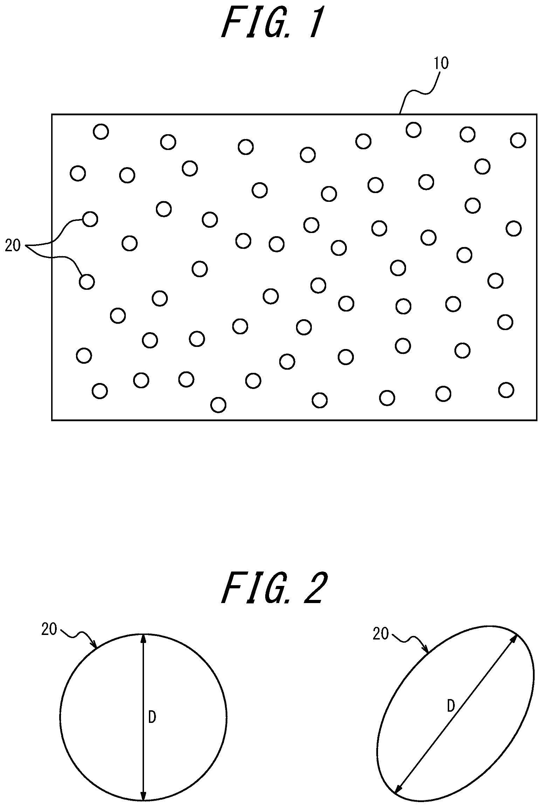

The vulcanized rubber composition of this disclosure is a vulcanized rubber composition comprising a rubber component and a resin component, wherein the vulcanized rubber composition 10 comprises a plurality of pores 20, as illustrates in Figure 1.

The vulcanized rubber composition 10 of this disclosure can enhance the on-ice performance when applied to tires by comprising the plurality of pores 20, as illustrated in Figure 1.

Here, the pores in the vulcanized rubber composition of this disclosure are a plurality of pores formed in the vulcanized rubber composition with an average diameter of 1 to 500 µm, as illustrated in Figure 1. The diameter of the pore refers to the largest diameter D (if the pore is not spherical, the greatest distance D between any two points on the inner wall of the pore) of the pore 20, as illustrated in Figure 2.

The average diameter of the pores is an average value of the diameters D of the pores 20 present in the vulcanized rubber composition of this disclosure. In the present disclosure, the cross section of the vulcanized rubber composition is observed by a digital microscope ("VHX-100" manufactured by Keyence Corporation), and the average value of the diameters of all pores present in one field of view (2.5 mm × 2.5 mm) is taken as the average value. Note, that in the vulcanized rubber composition of this disclosure, since the shape and size of the pores do not vary significantly within a single vulcanized rubber composition, the average value of the pores in one field of view can be used as the average diameter of the pores.

In addition, the pore ratio of the vulcanized rubber composition is preferably 5 to 45%. By setting the lower limit of the pore ratio to 5%, the on-ice performance can be improved more reliably. From the same perspective, the pore ratio is preferably 7% or more, and more preferably 15% or more. On the other hand, by setting the upper limit of the pore ratio to 45%, the decrease in wear resistance can be more reliably suppressed even if there are a plurality of pores. From the same perspective, the pore ratio is preferably 40% or less, and more preferably 37% or less.

The pore ratio is the percentage of the volume of the pores in the vulcanized rubber composition (volume %). The method of measuring the pore ratio is not limited, and can be measured using, for example, a specific gravity meter (ViBRA specific gravity meter "DMA-220" manufactured by Shinko Denshi Corporation).

Here, the vulcanized rubber composition of this disclosure has a plurality of pores, however, there is no limitation as to how the pores are provided. Depending on the pore conditions and the equipment used to produce the vulcanized rubber composition, known techniques can be used to form the pores.

For example, as described below, there is a method to form pores in the vulcanized rubber composition by blending a foaming agent, a foaming aid, or composite fibers, etc. in the rubber composition before vulcanization. The pore ratio can be controlled by changing the vulcanization conditions and the content of pore introducing agent such as the foaming agent and the composite fibers.

In addition, as a method for providing the pores, a technology can also be used in which powdered rubber is blended into the rubber composition before vulcanization to cause the powdered rubber to drop off from the surface of the vulcanized rubber composition after vulcanization, thereby forming pores near the surface of the vulcanized rubber composition. In this case, the size of pores, the pore ratio, and other conditions can be adjusted by adjusting the particle size and number of the powdered rubber.

Note, that the aforementioned vulcanized rubber composition refers to a vulcanized rubber obtainable by vulcanizing an unvulcanized rubber composition. The vulcanization conditions (temperature and time) are not particularly limited, and the vulcanization process can be performed under any conditions depending on the required performance.

The following is a description of the unvulcanized rubber composition (hereinafter simply referred to as "rubber composition"), which is the source of the vulcanized rubber composition of the present invention.

This rubber composition includes a rubber component and a resin component. The following is a description of each component of the rubber composition.

### (Rubber component)

The rubber component comprised in the rubber composition contains an isoprene skeleton rubber and at least one selected from a styrene-butadiene rubber and a butadiene rubber.

By containing the above-mentioned rubber as a rubber component, good wear resistance, reinforcement, low-heat generating property, etc. can be obtained.

The isoprene skeleton rubber is a rubber with an isoprene unit as the main skeleton, and specific examples include natural rubber (NR) and synthetic isoprene rubber (IR). The rubber component contains the isoprene skeleton rubber, which increases the fracture strength of the vulcanized rubber composition. As a result, the rolling resistance of the tire to which the rubber composition is applied can be reduced to improve fuel efficiency, and the wear resistance performance of tires can also be improved.

Here, the content of the isoprene skeleton rubber is preferably 1 to 80 % by mass in 100 % by mass of the rubber component, and 1 to 55 % by mass is more preferred. When the content of the isoprene skeleton rubber is 1 to 80 % by mass in 100 % by mass of the rubber component, the wear resistance performance and on-ice performance of the tire to which the vulcanized rubber composition is applied can be further improved. Moreover, when the content of the isoprene skeleton rubber is 1 to 55 % by mass in 100 % by mass of the rubber component, the wear resistance performance and on-ice performance of the tire to which the vulcanized rubber composition is applied can be even more improved. From the viewpoint of increasing the compounding effect of isoprene skeleton rubber, it is further preferred that the content of the isoprene skeleton rubber is 10 % by mass or more in 100 % by mass of the rubber component.

The styrene-butadiene rubber (SBR) is contained as the rubber component to make it possible to enhance the on-ice performance of the vulcanized rubber composition.

The conditions for the styrene-butadiene rubber are not limited and can be adjusted according to the required performance. Furthermore, the styrene-butadiene rubber may be unmodified or may have functional a group at the end.

In addition, the styrene-butadiene rubber preferably has a glass transition temperature of lower than -40 °C, more preferably of -45 °C or lower, and even more preferably of -50 °C or lower. Also, the styrene-butadiene rubber preferably has a glass transition temperature of higher than -90 °C, and more preferably of higher than -75 °C. When the glass transition temperature of the styrene-butadiene rubber is lower than -40 °C, the fuel efficiency and wear resistance performance of the tire to which the rubber composition is applied can be well maintained. Also, when the glass transition temperature of the styrene-butadiene rubber is higher than -90 °C, the on-ice performance can be enhanced.

Furthermore, the styrene-butadiene rubber preferably have a bound styrene content of 15 % by mass or less. The bound styrene content in styrene-butadiene rubber means the percentage of styrene units in the styrene-butadiene rubber. When the bound styrene content in the styrene-butadiene rubber is 15 % by mass or less, the glass transition temperature is easily lowered, and better on-ice performance is obtained. The bound styrene content in the styrene-butadiene rubber is preferably 14 % by mass or less, more preferably 13 % by mass or less, and even more preferably 12 % by mass or less. Also, from the viewpoint of wear resistance performance of the tire to which the vulcanized rubber composition is applied, the bound styrene content in the styrene-butadiene rubber is preferably 5 % by mass or more, more preferably 7 % by mass or more, and even more preferably 8 % by mass or more.

The bound styrene content in the styrene-butadiene rubber can be adjusted by the amount of monomer used for polymerization of the styrene-butadiene rubber, and/ or degree of polymerization, etc.

The butadiene rubber (BR) is contained as a rubber component to make it possible to provide a good balance between the on-ice performance and the wear resistance of the vulcanized rubber composition.

The type of the butadiene rubber is not limited. For example, high-cis polybutadiene can be used. In this case the cis-1,4 bound content is preferably 90 % by mass or more. This is because the wear resistance performance of the tire to which the vulcanized rubber composition is applied can be further enhanced.

It is also preferred that the at least one selected from the styrene-butadiene rubber and butadiene rubber has a functional group. When the at least one selected from the styrene-butadiene rubber and butadiene rubber has a functional group, since the dispersibility of a filler described below can be improved, the balance between the on-ice performance, high fuel efficiency performance, and wear resistance performance of the tire to which the vulcanized rubber composition is applied can be further improved, especially in terms of the high fuel efficiency performance and the wear resistance performance.

The functional group, that the at least one selected from the styrene-butadiene rubber and butadiene rubber has, are not limited, and can be selected according to the type of filler and required performance. For example, the functional group is a functional group having at least one element selected from nitrogen, silicon and oxygen, and tin.

Examples of such functional group include, for example, an amino group, an imino group, an amide group, an isocyanate group, a silyl group, an alkoxy group, an alkoxysilyl group, an epoxy group, a glycidyl group, and a carbonyl group, etc.

The method of introducing a specific functional group into the at least one selected from the styrene-butadiene rubber and butadiene rubber is not particularly limited and can be performed according to known methods depending on the required performance.

Furthermore, the total content of the at least one selected from the styrene-butadiene rubber and butadiene rubber in the rubber component is not particularly limited. However, from the viewpoint of balancing the on-ice performance and the wear resistance performance of the tire to which the vulcanized rubber composition is applied, it is preferably 20 to 99 % by mass, more preferably 60 to 90 % by mass, and even more preferably 50 to 90 % by mass in 100 % by mass of the rubber component.

### (Resin component)

In addition to the rubber component described above, the above-mentioned rubber composition further comprises a resin component.

Here, the resin component has a softening point higher than 110 °C and a polystyrene-equivalent weight-average molecular weight of 200 to 1600 g/mol. By including such a resin component in the rubber composition, the on-ice performance of the tire to which the vulcanized rubber composition is applied can be improved.

The resin component has a softening point higher than 110°C and a polystyrene-equivalent weight-average molecular weight of 200 to 1600 g/mol.

When the softening point of the resin component is higher than 110°C, the tire to which the rubber composition is applied can be sufficiently reinforced and the wear resistance performance can be sufficiently maintained. From the viewpoint of the wear resistance performance of the tire, the softening point of the resin component is more preferably 116 °C or higher, even more preferably 120 °C or higher, further preferably 123 °C or higher, and still more preferably 127 °C or higher. Also, from the viewpoint of processability, the softening point of the resin component is preferably 160 °C or lower, more preferably 150 °C or lower, even more preferably 145 °C or lower, further preferably 141 °C or lower, and still more preferably 136 °C or lower.

When the polystyrene-equivalent weight-average molecular weight of the resin component is 200 g/mol or more, it is difficult for the resin component to precipitate from the tire and the effect of the resin component can be fully expressed, and when it is 1600 g/mol or less, the resin component is easily compatible with the rubber component.

From the viewpoint of suppressing the precipitation of the resin component from the tire and suppressing deterioration of the tire appearance, the polystyrene-equivalent weight-average molecular weight of the resin component is more preferably 500 g/mol or more, even more preferably 550 g/mol or more, further preferably 600 g/mol or more, furthermore preferably 650 g/mol or more, and still more preferably 700 g/mol or more. Also, from the viewpoint of increasing the compatibility of the resin component with the rubber component and enhancing the effect of the resin component, the polystyrene-equivalent weight-average molecular weight of the resin component is more preferably 1570 g/mol or less, more preferably 1530 g/mol or less, more preferably 1500 g/mol or less, more preferably 1470 g/mol or less, more preferably 1430 g/mol or less, more preferably 1400 g/mol or less, more preferably 1370 g/mol or less, more preferably 1330 g/mol or less, more preferably 1300 g/mol or less, even more preferably 1200 g/mol or less, further preferably 1100 g/mol or less, furthermore preferably 1000 g/mol or less, and still more preferably 950 g/mol or less.

The ratio of the softening point (Ts_{HR}) (in °C) of the resin component to the polystyrene-equivalent weight-average molecular weight (Mw_{HR}) (in g/mol) of the resin component (Ts_{HR}/Mw_{HR}) is preferably 0.07 or more, more preferably 0.083 or more, even more preferably 0.095 or more, further preferably 0.104 or more, furthermore preferably 0.14 or more, and still more preferably 0.141 or more. Also, the ratio (Ts_{HR}/Mw_{HR}) is preferably 0.25 or less, and more preferably 0.23 or less.

The softening point and the polystyrene-equivalent weight-average molecular weight of the resin component can be determined by the method described in the Examples below.

It is also preferred that the resin component is at least partially hydrogenated. This is because the compatibility of the resin component with the isoprene skeleton rubber is increased, the mobility of the rubber component is controlled, and the hysteresis loss (tan δ) in the low temperature range can be improved, thereby improving the on-ice performance of the tire to which the vulcanized rubber composition is applied.

The resin component that is at least partially hydrogenated means a resin obtainable by reductive hydrogenation of the resin.

Examples of resins comprising the above resin component include, for example, C₅ resins, C₅-C₉ resins, C₉ resins, terpene resins, dicyclopentadiene resins, terpene-aromatic compound resins, and others. One of these resins may be used alone or in combination of two or more.

The C₅ resins include aliphatic petroleum resins obtained by (co)polymerizing C₅ fractions obtained from the thermal cracking of naphtha in the petrochemical industry.

The C₅ fractions usually contain olefinic hydrocarbons such as 1-pentene, 2-pentene, 2-methyl-1-butene, 2-methyl-2-butene, 3-methyl-1-butene; diolefin hydrocarbons such as 2-methyl-1,3-butadiene, 1,2-pentadiene, 1,3-pentadiene, 3-methyl-1,2-butadiene, etc. Commercially available products can be used as C₅ resins.

The C₅-C₉ resins refer to C₅-C₉ synthetic petroleum resins. The C₅-C₉ resins include, for example, solid polymers obtained by polymerizing C₅-C₁₁ fractions derived from petroleum using Friedel-Crafts catalysts such as AlCl₃ and BF₃. More specifically, the C₅-C₉ resins include copolymers with styrene, vinyltoluene, α-methylstyrene, indene, etc. as major components.

As for the C₅-C₉ resins, resins with fewer components of C₉ or higher are preferred from the viewpoint of compatibility with the rubber component. Here, "fewer components of C₉ or higher" shall mean that the C₉ or higher component in the total resin content is 50 % by mass or less, and preferably 40 % by mass or less. Commercially available products can be used as C₅-C₉ resins.

The C₉ resins refer to C₉ synthetic petroleum resins, which are solid polymers obtained by polymerizing C₉ fractions using a Friedel-Crafts catalysts such as AlCl₃ or BF₃, for example.

The C₉ resins include, for example, copolymers with indene, α-methylstyrene, vinyltoluene, etc. as major components.

The terpene resins are solid resins obtained by blending turpentine oil, which is obtained at the same time as rosin is obtained from pine trees, or polymerized components separated from it, and polymerizing them using a Friedel-Crafts catalysts. The terpene resins include β-pinene resin, α-pinene resin, and others. The terpene-aromatic compound resins include terpene-phenol resins as a typical example. The terpene-phenol resins can be obtained by reacting terpenes with various phenols using a Friedel-Crafts catalysts or by further condensation with formalin. There are no restrictions on the raw material terpenes, monoterpene hydrocarbons such as α-pinene and limonene are preferred, and especially α-pinene is preferred. Note, that the skeleton may contain styrene or the like.

The dicyclopentadiene resins refer to resins obtained by polymerizing dicyclopentadiene using, for example, a Friedel-Crafts catalysts such as AlCl₃ or BF₃.

The raw material for the hydrogenated resin component may include, for example, a resin copolymerized from the C₅ fractions and the dicyclopentadiene (DCPD) (C₅-DCPD resin).

Here, if the dicyclopentadiene-derived component in the total resin content is 50 % by mass or more, the C₅-DCPD resin shall be included in the dicyclopentadiene resin. If the dicyclopentadiene-derived component in the total resin content is less than 50 % by mass, the C₅-DCPD resin shall be included in the C₅ resin. The same is true even when a small amount of a third component or the like is included.

From the viewpoint of increasing the compatibility between the rubber component and the resin component and further improving the on-ice performance of the tire to which the vulcanized rubber composition is applied, the resin component preferably includes at least one selected from the group consisting of hydrogenated C₅ resins, hydrogenated C₅-C₉ resins, and hydrogenated dicyclopentadiene resins (hydrogenated DCPD resins) and hydrogenated terpene resins, more preferably includes at least one selected from the group consisting of hydrogenated C₅ resins and hydrogenated C₅-C₉ resins, and even more preferably includes at least hydrogenated C₅ resins. It is also preferred that the resin has at least a hydrogenated DCPD structure or a hydrogenated cyclic structure in the monomer.

Note, that the hydrogenated C₅ and hydrogenated C₅-C₉ resins are C₅ and C₅-C₉ resins in which the unsaturated bonds in the molecule are partially or completely hydrogenated.

For example, when a resin having an aromatic ring such as a benzene ring in the main or side chain is hydrogenated, the aromatic ring is reduced to a saturated ring (If the aromatic ring is a benzene ring, it is reduced to a cyclohexane ring). When the unsaturated bonds in the molecule are partially or completely hydrogenated, the storage modulus (E') of the rubber composition at low temperatures is reduced and the compatibility with the rubber component (A) is improved, thereby the effect of increasing tan δ becomes greater, and it becomes possible to realize excellent on-ice performance.

The content of the resin component is preferably 1 part by mass or more and 50 parts by mass or less per 100 parts by mass of the rubber component. When the content of the resin component in the rubber composition is 1 part by mass or more per 100 parts by mass of the rubber component, the effect of the resin component is fully expressed, and when the content is 50 parts by or less, it is difficult for the resin component to precipitate from the tire and the effect of the resin component can be fully expressed. From the viewpoint of enhancing the on-ice performance of the tire to which the vulcanized rubber composition is applied, the content of the resin component is preferably 5 parts by mass or more, more preferably 7 parts by mass or more, and even more preferably 9 parts by mass or more per 100 parts by mass of the rubber component. Also, from the viewpoint of suppressing precipitation of the resin component from the tire and preventing deterioration of tire appearance, the content of the resin component is preferably 45 parts by mass or less, and more preferably 40 parts by mass or less per 100 parts by mass of the rubber component.

### (Filler)

In addition to the rubber component and the resin component described above, it is preferred that the rubber composition further comprises a filler containing at least carbon black.

By comprising a filler containing at least carbon black together with the aforementioned rubber component, properties such as cut resistance and wear resistance of the vulcanized rubber composition can be further enhanced.

Here, the type of the carbon black is not limited to any particular type of carbon black, and examples of the carbon black include GPF, FEF, HAF, N339, IISAF, ISAF, and SAF grade carbon black. Among these, it is preferable to use ISAF, SAF, FEF or HAF grade carbon black from the viewpoint of further improving the wear resistance and cut resistance of the rubber composition. One of these carbon blacks may be used alone, or two or more may be used in combination.

In addition, for the carbon black, those with a nitrogen adsorption specific surface area (N₂SA, measured in accordance with JIS K 6217-2:2001) of 20 to 250 m²/g, 30 to 200 m²/g, and 30 to 150 m²/g can be used.

Further, for the carbon blacks, those with dibutyl phthalate (DBP) oil absorption (measured by the method described in JIS K 6217-4: 2001 "How to determine DBP absorption") of 50 to 200 cm³/100 g, and 60 to 150 cm³/ 100 g can be used.

Although there is no particular limit to the content of the carbon black, it is preferably 20 to 80 parts by mass, more preferably 25 to 70 parts by mass, and even more preferably 30 to 65 parts by mass per 100 parts by mass of the rubber component. If the content of the carbon black is 20 parts by mass or more per 100 parts by mass of the rubber component, the wear resistance can be further improved, and if the content of the carbon black is 80 parts by mass or less, deterioration of low-heat generating property can be more reliably controlled.

In addition, the filler preferably contains silica. This is because the on-ice performance and the wear resistance performance can be enhanced when the vulcanized rubber composition is applied to the tire.

Examples of the types of silica include, for example, wet silica (hydrous silica), dry silica (anhydrous silica), calcium silicate, and aluminum silicate, and the wet silica is preferred among these. One or more of these silicas may be used alone or in combination.

Furthermore, the wet silica can be a precipitated silica. The precipitated silica is silica obtained by growing primary silica particles in a reaction solution at a relatively high temperature and in a neutral to alkaline pH range in the initial stage of production, and then controlling the reaction to the acidic conditions to aggregate the primary particles.

Furthermore, the silica can have a CTAB specific surface area (cetyltrimethylammonium bromide adsorption specific surface area) of, for example, 70 m²/g or more and 250 m²/g or less, although this is not particularly limited. This CTAB specific surface area means the value measured in accordance with ASTM D3765-92. However, the specific surface area (m²/g) calculated from the adsorption amount of CTAB, when setting the adsorption cross section per molecule of cetyltrimethylammonium bromide on the silica surface as 0.35 nm², is defined as the CTAB specific surface area.

Also, the BET specific surface area of the silica can be 100 m²/g or more and 250 m²/g or less. The BET specific surface area is the specific surface area obtained by the BET method and can be measured in accordance with ASTM D4820-93 in this disclosure.

The content of the silica is preferably 5 to 100 parts by mass, more preferably 10 to 50 parts by mass, and even more preferably 10 to 45 parts by mass per 100 parts by mass of the rubber component. If the silica content is 5 parts by mass or more per 100 parts by mass of the rubber component, the wear resistance performance and on-ice performance of the vulcanized rubber composition can be further improved. If the content of the silica is less than 100 parts by mass, deterioration of processability and low rolling resistance property of the rubber composition can be suppressed.

In addition to the carbon black and silica mentioned above, the filler can also contain an inorganic compound represented by the following general formula (XX):

nM·xSiOy·zH₂O ... (XX)

[In the formula, M is at least one selected from metal selected from the group consisting of aluminum, magnesium, titanium, calcium, and zirconium, oxides or hydroxides of these metals and their hydrates, or carbonates of these metals; n, x, y, and z are integers from 1 to 5, integers from 0 to 10, integers from 2 to 5, and integers from 0 to 10, respectively.]

The inorganic compound of the above general formula (XX) can include alumina (Al₂O₃) such as γ-alumina and α-alumina, alumina monohydrate (Al₂O₃-H₂O) such as boehmite and diaspore, aluminum hydroxide [Al(OH)₃] such as gibbsite and bayerite, aluminum carbonate [Al₂(CO₃)₃], magnesium hydroxide [Mg(OH)₂], magnesium oxide (MgO), Magnesium carbonate (MgCO₃), talc (3MgO, 4SiO₂, H₂O), attapulgite (5MgO-8SiO₂-9H₂O), titanium white (TiO₂), titanium black (TiO₂ₙ₋₁), calcium oxide (CaO), calcium hydroxide [Ca(OH)₂], aluminum magnesium oxide (MgO-Al₂O₃), clay (Al₂O₃/2SiO₂), kaolin (Al₂O₃, 2SiO₂, 2H₂O), pyrophyllite (Al₂O₃, 4SiO₂, H₂O), bentonite (Al₂O₃, 4SiO₂, 2H₂O), aluminum silicate (Al₂SiO₅, Al₄-3SiO₄-5H₂O, etc.), magnesium silicate (Mg₂SiO₄, MgSiO₃, etc.), calcium silicate (Ca₂SiO₄, etc.), calcium aluminum silicate (Al₂O₃, CaO, 2SiO₂, etc.), calcium magnesium silicate (CaMgSiO₄), calcium carbonate (CaCO₃), zirconium oxide (ZrO₂), zirconium hydroxide [ZrO(OH)₂-nH₂O], zirconium carbonate [Zr(CO₃)₂], crystalline aluminosilicates containing hydrogen, alkali metals or alkaline earth metals to compensate for electrical charge, such as various zeolites, etc.

The inorganic compound of the above general formula (XX) preferably has an average particle size of 0.01 to 10 µm, and more preferably 0.05 to 5 µm, in terms of balance between the wear resistance and the on-ice performance.

Here, the total content of the filler is not particularly limited, but it is preferably 20 to 150 parts by mass, more preferably 30 to 120 parts by mass, and even more preferably 40 to 100 parts by mass per 100 parts by mass of the rubber component. This is because the tire properties such as wear resistance, on-ice performance, and low-hysteresis loss can be improved in a well-balanced manner by optimizing the amount of the filler.

Furthermore, in the filler, the content ratio of the silica to the total content of the silica and the carbon black (content of silica / total content of carbon black and silica) is 20 % by mass or more, more preferably 30 % by mass or more, and even more preferably 40 % by mass or more. Also, the content ratio of the silica to the total content of the silica and the carbon black is preferably 70 % by mass or less, and more preferably 60 % by mass or less.

As a result of the content ratio of the silica to the total content of the silica and the carbon black being 20 % by mass or more, better on-ice performance can be obtained, and as a result of the content ratio of the silica to the total content of the silica and the carbon black being 70 % by mass or less, better wear resistance can be obtained.

### (Pore introducing agent)

It is also preferred that the rubber composition further comprises a pore introducing agent. Because the vulcanized rubber composition contains a pore introducing agent, the vulcanized rubber has pores on the surface or inside, or on the surface and inside. The tire using this vulcanized rubber is flexible and easily adheres to icy and snowy road surfaces, at the same time of water on the road surface being easily absorbed into the pores on the tire surface so that the water is easily removed from the icy and snowy road surfaces, thereby improving on-ice braking performance.

Examples of the pore introducing agent include a foaming agent, a metal sulfate, a heat-expandable microcapsule, a porous cellulose, and a lignin derivative. One or more of which can be used alone or in a mixture of two or more. Furthermore, from the viewpoint of the on-ice performance, it is preferable to use the foaming agent.

The content of the pore introducing agent in the rubber composition is not particularly limited, but from the viewpoint of obtaining the desired pore ratio and maintaining the wear resistance, etc., it is preferably 0.1 to 20 parts by mass, more preferably 0.3 to 10 parts by mass, and even more preferably 0.5 to 5 parts by mass per 100 parts by mass of the rubber component.

### - Foaming agent

When the rubber composition contains a foaming agent as a pore introducing agent, the foaming agent creates bubbles in the vulcanized rubber during vulcanization of the rubber composition, making the vulcanized rubber a foamed rubber. Because of the flexibility of the foamed rubber, the tire surfaces made of the vulcanized rubber will adhere more easily to icy road surfaces. In addition, air bubbles create holes (foamed pores) on the vulcanized rubber surface and the tire surface, which function as water channels for water drainage.

Examples of the foaming agent include, for example, azodicarbonamide (ADCA), dinitroso pentamethylene tetramine (DPT), dinitroso pentastylene tetramine, benzenesulfonyl hydrazide derivatives, p,p'-oxybis benzenesulfonyl hydrazide (OBSH), inorganic foaming agents such as ammonium carbonate, sodium carbonate, potassium carbonate and other carbonates, ammonium bicarbonate, sodium bicarbonate, potassium bicarbonate and other bicarbonates (hydrogencarbonate), nitroso sulfonyl azo compounds that generate nitrogen, N,N'-dimethyl-N,N'-dinitrosophthalamide, toluenesulfonyl hydrazide, p-toluenesulfonyl semicarbazide, p,p'-oxybisbenzenesulfonyl semicarbazide, and others. Among these, azodicarbonamide (ADCA), dinitroso pentamethylene tetramine (DPT), and inorganic foaming agents are preferred, and it is more preferred to contain at least sodium bicarbonate, from the viewpoint of manufacturing processability. These foaming agents may be used alone or in combination of two or more.

The content of the foaming agent in the rubber composition is not particularly limited, but it is preferably 1 to 10 parts by mass, and more preferably 2 to 8 parts by mass per 100 parts by mass of the rubber component.

The rubber composition may further use urea, zinc stearate, zinc benzenesulfinate, zinc oxide, etc. as a foaming aid. They may be used alone or in combination of two or more. The use of the foaming aid in combination with the foaming agent can accelerate the foaming reaction, increase the degree of completion of the reaction, and inhibit unwanted degradation over time.

### - Metal sulfate

When the rubber composition contains a metal sulfate as the pore introducing agent, the metal sulfate protrudes from the tire surface obtained by vulcanizing the rubber composition and performs a claw function without disadvantage of being abrasive. Then, subsequently, the progressive evacuation of the metal sulfate from the rubber matrix creates a cavity that serves as a storage volume and passageway for draining the water film from the ice surface. Under these conditions, the contact between the tire surface (e.g., tread surface) and the ice is no longer lubricated, thus improving the coefficient of friction. Examples of the metal sulfate include magnesium sulfate.

The metal sulfate is preferably micrometer-sized particles. Specifically, the mean particle size and the median particle size (both expressed as mass) are preferably between 1 µm and 1 mm, and the median particle size is preferably between 2 µm and 800 µm.

As a result of the mean particle size and the median particle size being 1 µm or more, the target technical effect (i.e., formation of appropriate micro-roughness) is easily achieved. In addition, as a result of the average particle size and the median particle size being 1 mm or less, especially when the rubber composition is used as a tread, aesthetic degradation is suppressed (the appearance of too obvious particles on the tread surface can be suppressed) and the grip performance on melting ice is not easily compromised.

For all these reasons, the median particle size of the metal sulfate is preferably 2 µm to 500 µm, and more preferably 5 µm to 200 µm. This particularly preferable range of the particle size seems to correspond to an optimal compromise between the desired surface roughness on the one hand, and good contact between the rubber composition and ice on the other.

Furthermore, for the same reason as above, the content of the metal sulfate in the rubber composition is preferably 5 to 40 parts by mass, and more preferably 10 to 35 parts by mass per 100 parts by mass of the rubber component.

Note, that various known methods for analyzing the particle size and calculating the median particle size of microparticles (or the average diameter of microparticles, assuming they are substantially spherical), for example, by laser diffraction can be applied (for example, refer to the standard ISO-8130-13 or the standard JIS K5600-9-3). Particle size analysis by mechanical sieving can also be easily and preferably used. The operation comprises sifting a defined quantity of sample (e.g., 200 g) on a vibrating table for 30 minutes with various sieve diameters (e.g., with 1000, 800, 630, 500, 400, ... 100, 80 and 63 µm mesh according to a progressive ratio equal to 1.26); weighing the excess size collected in each sieve with a precision balance; estimating the percentage of the excess size at each mesh diameter relative to the total mass of the material from its weighing; finally, calculating the median particle size (or median diameter) or the mean particle size (or mean diameter) from the histogram of the particle size distribution in a known manner.

### - Heat-expandable microcapsule

The heat-expandable microcapsule comprises a shell material made of thermoplastic resin that encapsulates a heat-expandable substance. The shell material of the heat-expandable microcapsule can be formed by nitrile polymer.

The heat-expandable substance encapsulated in the shell material of the microcapsule has the property of vaporizing or expanding when heated, and is exemplified by at least one selected from the group consisting of hydrocarbons such as isoalkanes and normal alkanes. Isoalkanes include isobutane, isopentane, 2-methylpentane, 2-methylhexane, and 2,2,4-trimethylpentane, etc. Normal alkanes include n-butane, n-propane, n-hexane, n-heptane, and n-octane, etc. Each of these hydrocarbons may be used alone or in combination. A preferred form of the heat-expandable substance is a liquid hydrocarbon at room temperature dissolved in a gaseous hydrocarbon at room temperature. By using such a mixture of hydrocarbons, sufficient expansion force can be obtained from low to high temperature regions in the vulcanization molding temperature range for unvulcanized tires (150°C to 190°C).

As such a heat-expandable microcapsule, for example, product names "EXPANCEL 091DU-80" or "EXPANCEL 092DU-120", etc. manufactured by Expancel in Sweden, or product names "Matsumoto Microsphere F-85D" or "Matsumoto Microsphere F-100D" manufactured by Matsumoto Yushi Seiyaku can be used.

The content of the heat-expandable microcapsule in the rubber composition is preferably 0.1 to 10 parts by mass, and more preferably 0.5 to 5 parts by mass per 100 parts by mass of the rubber component.

### - Porous cellulose particles

When the rubber composition contains porous cellulose particles as the pore introducing agent, because the porous cellulose particles are exposed on the tire surface obtained by vulcanizing the rubber composition, water on icy and snowy road surfaces can be absorbed by the porous cellulose particles and thereby removing the water from between the tire and the road surface. In addition, because the presence of cellulose which is a polysaccharide causes interaction between the tire and the water on the icy and snowy road surfaces, the interaction between the tire and the water by modified polyoxyalkylene glycol can also be enhanced.

The porous cellulose particles have a porous structure with a pore ratio of 75 to 95% and can significantly improve the on-ice performance when blended into the rubber compositions. The porous cellulose particles with a pore ratio of 75% or more provide excellent on-ice performance, and those with a pore ratio of 95% or less increase the strength of the particles. The pore ratio is more preferably 80 to 90%.

The pore ratio of the porous cellulose particles can be obtained from the following formula by measuring the volume of a fixed mass sample (i.e., porous cellulose particles) with a measuring cylinder and determining its bulk density. Pore ratio [%] = {1 - (bulk density of sample [g/ml] / (true density of sample [g/ml])} × 100

Here, the true density of cellulose is 1.5.

The particle diameter of the porous cellulose particles is not particularly limited, but from the viewpoint of wear resistance, those with an average particle diameter of 1000 µm or less are preferably used. The lower limit of the average particle size is not particularly limited, but is preferably 5 µm or more. The average particle size is more preferably 100 to 800 µm, and even more preferably 200 to 800 µm.

As the porous cellulose particles, spherical particles with a long/short diameter ratio of 1 to 2 are preferably used. The use of particles with such a spherical structure can improve their dispersibility in the rubber composition and contribute to improving the on-ice performance and maintaining the wear resistance, etc. The ratio of long diameter/short diameter is more preferably 1.0 to 1.5.

The average diameter of porous cellulose particles and the ratio of long diameter/short diameter are determined as follows. That is, the average particle diameter is obtained by observing the porous cellulose particles under a microscope to obtain an image, using this image to measure the long and short diameters of the particles for 100 particles, and calculating the average value. Also, the ratio of long diameter/short diameter is obtained by the average value when dividing the long diameter by the short diameter.

Such porous cellulose particles are commercially available as "Viscopearl" from Rengo Corporation, and are described in those Patent Publication, JP2001-323095 and JP2004-115284, etc., and they can be suitably used.

The content of the porous cellulose particles in the rubber composition is preferably 0.3 to 20 parts by mass per 100 parts by mass of the rubber component. As a result of the content being 0.3 parts by mass or more, the effect of improving the on-ice performance can be enhanced, and as a result of the content being 20 parts by mass or less, it is possible to prevent the rubber hardness from becoming too high, thereby suppressing the decrease in wear resistance. The content of the porous cellulose particles is more preferably 1 to 15 parts by weight, and even more preferably 3 to 15 parts by mass.

### - Lignin derivative

When the rubber composition comprises a lignin derivative as the pore introducing agent, the effect of improving the on-ice performance can be enhanced.

Here, lignin sulfonate is preferably used as the lignin derivative. Examples of the lignin sulfonate include alkali metal salts, alkaline earth metal salts, ammonium salts, and alcohol amine salts of lignin sulfonic acid, and can include at least one of these. Preferably, the lignin derivative is alkali metal and/or alkaline earth metal salts of lignin sulfonic acid, such as potassium salts, sodium salts, calcium salts, magnesium salts, lithium salts, and barium salts, or a mixture of these salts.

### (Foaming aid)

Further, when the rubber composition comprises a foaming agent as the pore introducing agent, it is preferable to further comprise a foaming aid. Examples of the foaming aid include urea, zinc stearate, zinc benzenesulfinate, zinc oxide, etc. They may be used alone or in combination of two or more.

The use of the foaming aid in combination with the aforementioned foaming agent can accelerate the foaming reaction, increase the degree of completion of the reaction, and inhibit unwanted degradation over time.

Furthermore, the total content of the foaming agent and the foaming aid is preferably 1 to 30 parts by mass per 100 parts by mass of the rubber component. When the total content of the foaming agent and the foaming aid is 1 mass part or more, the rubber composition can be sufficiently foamed during vulcanization and a foaming ratio of the vulcanized rubber can be maintained high. On the other hand, when the total content of the foaming agent and the foaming aid is 30 parts by mass or less, a decrease in the foaming ratio can also be suppressed.

From the viewpoint of suppressing the reduction of the foaming ratio as described above, the total content of the foaming agent and the foaming aid is preferably 3 parts by mass or more, and more preferably 5 parts by mass or more per 100 parts by mass of the rubber component. Also, from the viewpoint of suppressing the reduction of the foaming ratio as described above, the total content of the foaming agent and the foaming aid is preferably 25 parts by mass or less, and more preferably 20 parts by mass or less per 100 parts by mass of the rubber component.

In addition, in the rubber composition, it is preferred that the mass ratio of the foaming agent to the foaming aid (foaming agent: foaming aid) is 1:1.1 to 1:3.3. If the mass ratio (foaming agent: foaming aid) is less than 1:1.1, the rubber composition may not foam sufficiently during vulcanization and the foaming ratio of the vulcanized rubber may decrease. On the other hand, if the mass ratio (foaming agent: foaming aid) exceeds 1:3.3, the foaming ratio may also decrease.

From the viewpoint of suppressing the reduction of the foaming ratio as described above, the mass ratio of the foaming agent to the foaming aid (foaming agent: foaming aid) is preferably 1:1.2 or more, and more preferably 1:1.3. Also, from the viewpoint of suppressing the reduction of the foaming ratio as described above, the mass ratio of the foaming agent to the foaming aid (foaming agent: foaming aid) is preferably 1:3.2 or less, more preferably 1:3.1 or less, even more preferably 1:2.9 or less, further preferably 1:2.7 or less, still more preferably 1:2.5 or less, and especially preferably 1:2.3 or less.

In addition, from the viewpoint of the foaming ratio of vulcanized rubber and the on-ice performance of the tire, the content of the foaming aid is preferably in the range of 4 to 14 parts by mass, and more preferably in the range of 6 to 14 parts by mass per 100 parts by mass of the rubber component.

### (Organic acid)

The rubber composition may contain an organic acid, if necessary. In this case, the SP value of the organic acid is preferably 9.15 to 16.0 (cal/cm³)^{1/2}. The organic acid acts to improve the foaming ratio of the vulcanized rubber composition by balancing the rate of decomposition and foaming reaction of the foaming agent with the rate of vulcanization reaction of the rubber composition during vulcanization of the rubber composition. Therefore, by blending the organic acid into the rubber composition, it is possible to promote the decomposition and foaming reaction of the foaming agent, balance the rate of decomposition and foaming reaction with the rate of vulcanization reaction of the rubber composition, and improve the foaming rate of vulcanized rubber, while maintaining good workability of the rubber composition, and by applying the rubber composition to tires, the on-ice performance of tires can be improved.

If the SP value of the organic acid is less than 9.15 (cal/cm³)^{1/2}, the decomposition of the foaming agent may not be sufficiently accelerated, and if the SP value of the organic acid exceeds 16.0 (cal/cm³)^{1/2}, the adhesiveness of the rubber composition containing the organic acid may increase, causing the rubber composition to adhere to rolls and other manufacturing equipment during the production of the rubber composition, which may worsen the workability of the rubber composition.

From the same perspective, the SP value of the organic acid is preferably 10.5 to 14.3 (cal/cm³)^{1/2}. If the SP value of the organic acid is 10.5 (cal/cm³)^{1/2} or more, it is even more effective in promoting the decomposition of the foaming agent, and if the SP value of the organic acid is 14.3 (cal/cm³)^{1/2} or less, the adhesiveness of the rubber composition containing the organic acid can be further reduced and the workability of the rubber composition is further improved.

As for the stearic acid, a general-purpose vulcanization aid for the rubber compositions, it has an SP value of 9.12 (cal/cm3)1/2 and is less effective in promoting the decomposition of the foamed rubber agent.

Note that in this document, the SP value (solubility parameter) of an organic acid is calculated according to the Fedors method.

The organic acid may be monocarboxylic acid, dicarboxylic acid, tricarboxylic acid, etc., and may be aliphatic or aromatic, and may have functional groups other than carboxyl groups, such as hydroxyl groups, ketone groups, and ethylenically unsaturated groups.

The organic acid preferably has an aromatic ring (aromatic), and is preferably a monocarboxylic acid. When the organic acid has an aromatic ring, the adhesiveness of the rubber composition can be further reduced, and the workability of the rubber composition is further improved, making the rubber composition more difficult to stick to rolls and other manufacturing equipment.

The aliphatic monocarboxylic acid includes palmitic acid and others.

The aliphatic dicarboxylic acid includes oxalic acid, malonic acid, succinic acid, glutaric acid, adipic acid, pimelic acid, suberic acid, azelaic acid, sebacic acid, and others.

The aromatic monocarboxylic includes benzoic acid, salicylic acid, and others.

The aromatic dicarboxylic acid includes phthalic acid, and others.

The organic acid with functional groups other than carboxyl groups includes tartaric acid, malic acid, maleic acid, glycolic acid, α-ketoglutaric acid, and others.

The organic acid may be used alone or in combination of two or more.

In addition, benzoic acid is particularly preferred as the organic acid. When the benzoic acid is added to the rubber composition, the adhesiveness of the rubber composition can be further reduced, and the workability of the rubber composition is further improved, making the rubber composition more difficult to stick to rolls and other manufacturing equipment.

From the viewpoints of the workability of the rubber composition, the foaming ratio of the vulcanized rubber, and the on-ice performance of the tire, the content of the organic acid is preferably 0.1 to 7 parts by mass, more preferably 1.5 to 7 parts by mass, and even more preferably 3 to 7 parts by mass per 100 parts by mass of the rubber composition.

Also, from the viewpoints of the foaming ratio of the vulcanized rubber and the on-ice performance of the tire, the total content of the foaming agent and the organic acid is preferably 3 to 15 parts by mass, more preferably 5 to 15 parts by mass, and even more preferably 7 to 15 parts by mass per 100 parts by mass of the rubber component.

Furthermore, from the viewpoint of the foaming rate of the vulcanized rubber and the on-ice performance of the tire, the mass ratio of the foaming agent to the organic acid (foaming agent: organic acid) is preferably in the range of 1:0.5 to 1:1.5, and more preferably in the range of 1:0.7 to 1:1.3.

### (Composite fibers)

It is preferred that the rubber composition further comprises composite fibers.

The inclusion of the composite fibers can ensure sufficient affinity with water and provide excellent drainage performance and on-ice performance, especially when used in tire applications.

The composite fibers are preferably made of a hydrophilic resin with a coating layer on the surface. This is because the coating layer on the surface of the composite fibers provides good dispersion of the composite fibers in the rubber composition.

Note, that the hydrophilic resin is preferably insoluble in water. By employing a hydrophilic resin that is insoluble in water, dissolution of the composite fibers can be suppressed even when the composite fibers are exposed on the surface of the product (e.g., tire).

The hydrophilic resin is not particularly limited as long as it is a resin that can exhibit affinity with water, that is, a resin that has a hydrophilic group in its molecule. Specifically, it is preferably a resin containing an oxygen atom, a nitrogen atom, or a sulfur atom, for example, a resin containing at least one selected from the group consisting of -OH, -C(=O)OH, -OC(=O)R (R is an alkyl group), -NH2, -NCO, and -SH. Among these, -OH, -C(=O)OH, -OC(=O)R, -NH2, and -NCO are preferred.

More specifically, examples of the hydrophilic resin include ethylene-vinyl alcohol copolymer, vinyl alcohol monopolymer, poly(meth)acrylic acid resin or its ester resin (hereafter, copolymers containing a component unit derived from (meth) acrylic acid and (co)polymers containing a component unit derived from (meth) acrylic ester are also collectively referred to as (meth) acrylic resins.), polyamide resin, polyethylene glycol resin, carboxy vinyl copolymer, styrene-maleic acid copolymer, polyvinyl pyrrolidone resin, vinyl pyrrolidone-vinyl acetate copolymer, polyester resin, cellulose resin, etc. Among these, ethylene-vinyl alcohol copolymer, vinyl alcohol monopolymer, poly(meth)acrylic acid resin, polyamide resin, aliphatic polyamide resin, aromatic polyamide resin, polyester resin, polyvinyl alcohol resin, cellulose resin, or (meth)acrylic resin are preferred, and ethylene-vinyl alcohol copolymer is more preferred.

The surface of the fiber made of the hydrophilic resin preferably has an affinity for the rubber component and preferably has a coating layer made of a low-melting-point resin having a melting point lower than the maximum vulcanization temperature (hereinafter also referred to as "low-melting-point resin"). By forming such a coating layer, the hydrophilic resin itself can effectively retain its affinity with water while demonstrating good affinity with the rubber component in the vicinity of the composite fibers, as well as trapping the hydrophilic resin, which is difficult to melt during vulcanization (during foaming), to promote the formation of cavities inside the composite fibers. In other words, while ensuring good dispersion of the composite fibers in the rubber component and fully demonstrating the drainage effect caused by the hydrophilic resin, it is also possible to fully demonstrate the effect of improved on-ice performance due to the pores existing inside the composite fibers. In addition, such low-melting-point resin melts during vulcanization to form a fluidized coating layer that contributes to adhesion between the rubber component and the composite fibers, thereby providing good on-ice performance and wear resistance performance.

The thickness of the coating layer can vary depending on the amount of the hydrophilic resin and the average diameter of the composite fibers, but is preferably 0.001 to 10 µm, and more preferably 0.001 to 5 µm. By forming the coating layer with a thickness in the above range, the desired effect in the present disclosure can be fully demonstrated. In addition, the coating layer may be formed over the entire surface of the hydrophilic resin or over a portion of the surface of the hydrophilic resin, and specifically, the coating layer is preferably formed over at least 50% of the total surface area of the hydrophilic resin.

Specifically, the low-melting-point resin used in the coating layer is preferably a resin in which the polar component is 50% by mass or less in relation to the total components in the low-melting-point resin, and a polyolefin resin is more preferred. When the polar component of the resin is within the above range in relation to the total components, the resin has a moderate difference in SP value from the rubber component and a melting point that is moderately lower than the highest vulcanization temperature. Therefore, the resin can easily melt during vulcanization to promote foaming of the vulcanized rubber while sufficiently ensuring good affinity with the rubber component. Thus, it is possible to more reliably improve the dispersion of fibers made of hydrophilic resin in the rubber composition while reliably forming cavities in the interior of the composite fibers.

The polyolefin resin may be branched or linear. It may also be an ionomer resin in which the intermolecular interactions of ethylene-methacrylic acid copolymers are cross-linked by metal ions. Specifically, examples of the polyolefin resin include polyethylene, polypropylene, polybutene, polystyrene, ethylene-propylene copolymer, ethylene-methacrylic acid copolymer, ethylene-ethyl acrylate copolymer, ethylene-propylene-diene ternary copolymer, ethylene-vinyl acetate copolymer, and their ionomer resins. These may be used alone or in combination with one or more of the above.

Among these, the polyolefin resin is preferred to be polyethylene resins, polypropylene resins, polyolefin ionomers, and maleic anhydride modified α-polyolefins. When the polyolefin ionomer or maleic anhydride-modified α-polyolefin is used, it also bonds with the hydroxyl groups of the hydrophilic resin, thus further improving the rubber strength.

In order to produce the composite fiber which is made of hydrophilic resin with a coating layer of the aforementioned low-melting-point resin, these resins can be blended using a mixing mill and melt-spun to form unstretched yarn, and then the unstretched yarn can be made into fibers by heat stretching. Alternatively, the resins may be blended using two twin-screw extruders equipped with dies and then fibered in the same manner. In this case, the hydrophilic resin and the low-melting-point resin are extruded simultaneously from the two die outlets respectively to form the unstretched yarn. The amount of these resins fed into the mixing mill or hopper can vary depending on the length and diameter of the resulting composite (fiber), the amount of the low-melting-point resin is preferably 5 to 300 parts by mass, more preferably 10 to 150 parts by mass per 100 parts by mass of the hydrophilic resin. By feeding these resins in amounts within the aforementioned range, a coating layer that can achieve the desired effect is effectively formed on the surface of the composite (fiber) made of hydrophilic resin obtained after stretching process.

The average length of the resulting composite fiber is preferably 0.1 to 500 mm, more preferably 0.1 to 7 mm, and the average diameter is preferably 0.001 to 2 mm, more preferably 0.005 to 0.5 mm. When the average length and diameter are within the above ranges, there is no risk of entanglement of the composite fibers more than necessary and no risk of interfering with good dispersion. The aspect ratio is preferably 10 to 4,000, and more preferably from 50 to 2,000. The aspect ratio means the ratio of the long axis of the composite fiber to the short axis thereof.

Furthermore, for the composite fiber obtained, the ratio (A/B) of the cross sectional length A in the long radial direction and the cross sectional length B in the short radial direction perpendicular to the long radial direction, which are in the cross section perpendicular to the longitudinal axis direction, is preferably greater than 1, more preferably 1.5 or greater, even more preferably 1.8 or greater, and particularly preferably 2.0 or greater. Also, the ratio A/B is preferably 20 or less, more preferably 15 or less, and particularly preferably 10 or less. By setting it within the above range, the on-ice performance will be further improved. As long as A/B is greater than 1, the cross-sectional shape is not restricted and can be oval, rectangular, polygonal, irregular, or any other shape.

The amount of the composite fiber made of the hydrophilic resin with the coating layer is preferably 0.1 to 100 parts by mass, more preferably 0.3 to 30 parts by mass, even more preferably 0.5 to 10 parts by mass, and further preferably 1 to 6 parts by mass per 100 parts by mass of the rubber component. When the amount of the composite fiber made of the hydrophilic resin with the coating layer formed is within the above range, it is possible to form cavities inside the composite fiber to provide good drainage performance while maintaining sufficient durability.

Furthermore, the ratio of the composite fiber and the pore introducing agent is not particularly limited, but from the viewpoint of balancing and improving the wear resistance performance and the on-ice performance, the mass ratio of the composite fiber and the pore introducing agent (pore introducing agent / composite fiber) is preferably 0.5 to 10, more preferably 1 to 8, even more preferably 1.5 to 7, particularly preferably 2 to 6.

### (Other components)

In addition to the above-mentioned components, the rubber composition may comprise compounding agents commonly used in the rubber industry as other components. As for other components, for example, silane coupling agents, vulcanizing agents, vulcanization accelerators, polyethylene glycol, softening agents, anti-aging agents, zinc oxide, etc. can be selected and included as appropriate to the extent not detrimental to the purpose of this disclosure. Commercial products can be suitably used as these compounding agents.

When silica is contained as a filler as described above, it is preferable to further include a silane coupling agent. This is because silica can further improve the effects of cut resistance, reinforcement, and low hysteresis loss. Note that any known silane coupling agent can be used as appropriate. Examples of the silane coupling agent include, for example, bis(3-triethoxysilylpropyl)polysulfide, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl ethyl-N,N-dimethylthiocarbamoyl tetrasulfide, 3-trimethoxysilylpropyl benzothiazolyl tetrasulfide, 3-triethoxysilylpropylbenzothiazolyl tetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyl dimethoxymethyl silane, dimethoxymethylsilylpropyl-N,N-dimethylthiocarbamoyl tetrasulfide, dimethoxymethylsilylpropyl benzothiazolyl tetrasulfide, etc. These silane coupling agents may be used alone or in combination of two or more.

Although the content of the silane coupling agent varies depending on the type of silane coupling agent and other factors, the content of the silane coupling agent is preferably 0.2 or less, more preferably 0.1 or less, and even more preferably 0.09 or less, in mass ratio, per the content of silica. This is because the cut resistance of the rubber composition can be further improved by reducing the content of silane coupling agent to 0.2 or less, in mass ratio, to the content of silica.

As the vulcanization accelerator, conventionally known ones can be used and are not restricted. For example, sulfenamide vulcanization accelerators such as CBS(N-cyclohexyl-2-benzothiazylsulfenamide), TBBS(N-t-butyl-2-benzothiazylsulfenamide), TBSI(N-t-butyl-2-benzothiazylsulfenimide); guanidine vulcanization accelerators such as DPG (diphenylguanidine); thiuram vulcanization accelerators such as tetraoctylthiuram disulfide and tetrabenzylthiuram disulfide; and zinc dialkyldithiophosphate, etc. The content thereof is preferably less than the content of sulfur, and it is more preferable that the content is 1 to 10 parts by mass per 100 parts by mass of the rubber component.

It is preferred that the rubber composition further contain glycerol monostearate from the viewpoint that it can further improve workability, such as reducing scorch time and increasing vulcanized speed during tire production.

The content of the glycerol monostearate is 0.1 parts by mass or more, preferably 0.3 parts by mass or more, and even more preferably 0.5 parts by mass or more per 100 parts by mass of the rubber component. If it is less than 0.1 parts by mass, the effect of the present disclosure may not be obtained well. The content is 3.5 parts by mass or less, preferably 3 parts by mass or less, more preferably 2.5 parts by mass or less. If it exceeds 3.5 parts by mass, the scorch time tends to be too short.

Furthermore, the content of the polyethylene glycol is 0.1 mass part or more, preferably 0.3 parts by mass or more, more preferably 0.5 parts by mass or more per 100 parts by mass of the rubber component. If it is less than 0.1 parts by mass, the effect of the present disclosure may not be obtained well. The content is 3.5 parts by mass or less, preferably 3 parts by mass or less, more preferably 2.5 parts by mass or less. If it exceeds 3.5 parts by mass, the scorch time tends to be too short.

In addition, the rubber composition can also contain a softener from the viewpoint of increasing the flexibility of the rubber and achieving better on-ice performance. The softeners can be any conventionally known softeners and are not restricted, but include petroleum softeners such as aroma oil, paraffin oil, and naphthenic oil, and vegetable softeners such as palm oil, castor oil, cottonseed oil, and soybean oil. One or more of these can be used alone or in combination.

When the softeners are included, from the viewpoint of ease of handling, it is preferable to contain, among the softeners mentioned above, those that are liquid at room temperature, such as 25°C, for example, aromatic oil, paraffin oil, naphthenic oil, or other petroleum softeners.

In addition, the rubber composition can contain resin from the viewpoint of increasing the flexibility of the rubber and achieving better wet and on-ice performance. Various natural and synthetic resins can be used as the resin, and specifically, rosin resins, terpene resins, petroleum resins, phenolic resins, coal resins, xylene resins, etc. are preferred. One of these resins may be used alone, or two or more may be used in combination.

The method of manufacturing the aforementioned rubber composition is not particularly limited. For example, it can be obtained by blending and mixing the rubber component, filler containing at least silica, resin component, and other optional components, etc., as described above, in a known manner.

### <Tire>

The tire according to this disclosure is a tire in which the vulcanized rubber composition of the present disclosure as described above is used for the tread portion. By applying the aforementioned rubber composition to the tread portion, excellent on-ice performance can be achieved while maintaining good wear resistance.

Here, the tire of the present disclosure can be used, for example, as a tire for construction vehicles, trucks and buses, aircrafts, and passenger cars, and it is especially preferred that the tire is for passenger cars or trucks and buses. This is because the vulcanized rubber composition used as the material for the tread portion has excellent on-ice performance and wear resistance performance, which is a great advantage when used as a passenger car tire or truck and bus tire.

When the vulcanized rubber composition of this disclosure described above is used for the tread portion, for example, the tread structure described in the following documents can be adopted.

JP 2016-203842, JP 2009-196527, JP 2000-225815, JP 2000-264019, JP 2003-211921, WO 2014/196409.

Note, that the tire of this disclosure can be manufactured according to the usual methods, with no particular restrictions, except that the vulcanized rubber composition of this disclosure described above is used for the tread portion of the tire. In addition to normal or oxygen-controlled air, inert gases such as nitrogen, argon, helium, etc., can be used as gases to fill the tire.

### EXAMPLES

The present disclosure is described in more detail below with examples, however this disclosure is not limited in any way to the following examples.

### (Example 1, Comparative example 1)

Samples of rubber compositions were prepared by mixing and kneading in the usual way according to the formulations provided in Table 1. In Table 1, rubber components, silica, carbon black, resin components, and liquid softener components are denoted by integers, and others are listed to one decimal place.

Each of the obtained samples was evaluated for (2) to (4) after vulcanization treatment.

For each sample after vulcanization, the foaming pore ratio was measured under the following conditions (1). Table 1 shows the measurement results.

### (Examples 2 and 3, Comparative examples 2 and 3)

Samples of rubber compositions were prepared by mixing and kneading in the usual way according to the formulations presented in Tables 2 and 3. In Tables 2 and 3, rubber components, silica, carbon black, resin components, and liquid softener components are denoted by integers, and others are listed to one decimal place.

Each of the obtained samples were evaluated for (3) after vulcanization treatment.

For each sample after vulcanization, the pore ratio of the foam was measured under the following conditions (1). Tables 2 and 3 show the measurement results.

### (Reference examples 1 to 6)

Samples of rubber compositions were prepared by mixing and kneading in the usual way according to the formulations presented in Table 4. In Table 4, rubber components, silica, carbon black, resin components, and liquid softener components are denoted by integers, and others are listed to one decimal place.

### (Analysis method for resin component)

The softening point and the weight-average molecular weight of the resin component blended into the rubber composition were measured by the following method. In addition, the SP value (solubility parameter) of the resin component was calculated according to the Fedors method.

### - Softening point

The softening point of the resin component was measured in accordance with JIS-K2207-1996 (Circular ball method).

### - Weight-average molecular weight

The weight-average molecular weight of the hydrogenated resin was measured by gel permeation chromatography (GPC) under the following conditions, and the polystyrene-equivalent weight-average molecular weight was calculated.
Column temperature: 40°C
Injection volume: 50 µL
Carrier and flow rate: Tetrahydrofuran 0.6 mL/min
Sample Preparation: Dissolved about 2.5 mg of resin component in 10 mL of tetrahydrofuran

### (1) Foaming pore ratio of vulcanized rubber

After cutting each sample of vulcanized rubber composition at any point, the weight of each sample of cut vulcanized rubber composition was measured using a dense electronic balance, and the difference from the theoretical weight ((theoretical specific gravity / measured specific gravity - 1) × 100) was calculated as the foaming pore ratio (%). Tables 1 to 3 show the calculation results.

### <Evaluation>

### (2) Wear resistance of vulcanized rubber

The amount of wear was measured for each sample of vulcanized rubber composition according to method B of the sliding wear test in JIS K 7218:1986. The measurement temperature was room temperature (23°C) and the load was 16 N.

The evaluation was made by calculating the inverse of the amount of wear and expressed as an index when the inverse of the amount of wear of the vulcanized rubber in Comparative Example 1 was set to 100. The larger the index value, the smaller the amount of wear and the better the wear resistance. Table 1 shows the evaluation results.

### (3) On-ice performance of vulcanized rubber

For each sample of vulcanized rubber composition, the dynamic friction coefficient µ was calculated by detecting, with a load cell, the frictional force generated when the sample was molded into a test piece 50 mm in diameter and 10 mm thick and then pressed and rotated against fixed ice. The measurement temperature was -2°C, the surface pressure was 12 kgf/cm², and the sample rotation speed was 20 cm/sec.

The evaluation is presented in Table 1 as an index when the dynamic friction coefficient µ of Comparative Example 1 is 100, and in Table 2 as an index when the dynamic friction coefficient µ of Comparative Example 3 is 100. The larger the index value, the larger the dynamic friction coefficient µ and the better the on-ice performance. Tables 1 to 3 show the evaluation results.

### (4) Overall evaluation

The total of the above evaluation values for (2) Wear resistance of vulcanized rubber and (3) On-ice performance of vulcanized rubber was used as the overall evaluation value. The larger the evaluation value, the higher the level of both wear resistance and on-ice performance. Table 1 shows the evaluation results.

**[Table 1]**

| | Comparative Example 1 | Example 1 |
|---|---|---|
| Natural rubber | 50 | 50 |
| Butadiene rubber * 1 | 30 | 30 |
| Styrene-butadiene rubber *2 | 20 | 20 |
| Carbon black *3 | 35 | 35 |
| Liquid softener component *4 | 20 | 20 |
| Silica *5 | 35 | 35 |
| Resin *6 | 15 | - |
| Hydrogenated resin *7 | - | 15 |
| Silane coupling agent *8 | 3.0 | 3.0 |
| Zinc oxide | 2.0 | 2.0 |
| Anti-aging agent *9 | 3.5 | 3.5 |
| Foaming chemicals (1) *13 | 11.3 | 11.3 |
| Vulcanization accelerators *11 | 3.5 | 3.5 |
| Sulfur | 2.0 | 2.0 |
| Other chemicals *12 | 2.2 | 2.2 |
| Foaming void fraction (%) | 27.5 | 26.4 |
| Wear resistance | 100 | 126 |
| On-ice performance | 100 | 89 |
| Overall evaluation | 200 | 0 |

**[Table 2]**

| | Comparative Example 2 | Example 2 |
|---|---|---|
| Natural rubber | 50 | 50 |
| Butadiene rubber * 1 | 30 | 30 |
| Styrene-butadiene rubber *2 | 20 | 20 |
| Carbon black *3 | 35 | 35 |
| Liquid softener component *4 | 20 | 20 |
| Silica *5 | 35 | 35 |
| Hydrogenated resin *7 | - | 15 |
| Resin *6 | 15 | - |
| Silane coupling agent *8 | 3 | 3 |
| Zinc oxide | 2 | 2 |
| Anti-aging agent *9 | 3.5 | 3.5 |
| Vulcanization accelerators *11 | 3.5 | 3.5 |
| Sulfur | 2 | 2 |
| Other chemicals *12 | 2.2 | 2.2 |
| Foaming agent (1) *13 | - | 11.25 |
| Foaming agent (2) *14 | 6 | - |
| Foaming void fraction (%) | 27.5 | 24.4 |
| On-ice performance | 100 | 117 |

**[Table 3]**

| | Example 3 | Example 4 | Example 5 | Comparative Example 3 |
|---|---|---|---|---|
| Natural rubber | 50 | 50 | 50 | 50 |
| Butadiene rubber * 1 | 30 | 30 | 30 | 30 |
| Styrene-butadiene rubber *2 | 20 | 20 | 20 | 20 |
| Carbon black *3 | 35 | 35 | 35 | 35 |
| Liquid softener component *4 | 20 | 20 | 20 | 20 |
| Silica *5 | 35 | 35 | 35 | 35 |
| Hydrogenated resin *7 | 15 | 15 | 15 | - |
| Resin *6 | - | - | - | 15 |
| Silane coupling agent *8 | 3 | 3 | 3 | 3 |
| Zinc oxide | 2 | 2 | 2 | 2 |
| Anti-aging agent *9 | 3.5 | 3.5 | 3.5 | 3.5 |
| Vulcanization accelerators * 11 | 3.5 | 3.5 | 3.5 | 3.5 |
| Sulfur | 2 | 2 | 2 | 2 |
| Other chemicals * 12 | 2.2 | 2.2 | 2.2 | 2.2 |
| Foaming agent (1) * 13 | 8.75 | - | - | - |
| Foaming agent (2) * 14 | - | 6 | 4 | 4 |
| Foaming void fraction (%) | 17.0 | 20.7 | 14.5 | 12.6 |
| On-ice performance | 109 | 107 | 105 | 100 |

**[Table 4]**

| | Reference Example 1 | Reference Example 2 | Reference Example 3 | Reference Example 4 | Reference Example 5 | Reference Example 6 |
|---|---|---|---|---|---|---|
| Natural rubber | 50 | 50 | 50 | 50 | 50 | 50 |
| Butadiene rubber * 1 | 50 | - | 50 | - | 50 | 30 |
| Styrene-butadiene rubber *2 | - | 50 | - | 50 | - | 20 |
| Carbon black *3 | 35 | 35 | 35 | 35 | 35 | 35 |
| Liquid softener component *4 | 20 | 20 | 20 | 20 | 20 | 20 |
| Silica *5 | 35 | 35 | 35 | 35 | 35 | 35 |
| Hydrogenated resin *7 | 15 | 15 | 15 | 15 | 15 | 15 |
| Silane coupling agent *8 | 3 | 3 | 3 | 3 | 3 | 3 |
| Zinc oxide | 2 | 2 | 2 | 2 | 2 | 2 |
| Anti-aging agent *9 | 3.5 | 3.5 | 3.5 | 3.5 | 3.5 | 3.5 |
| Vulcanization accelerators * 11 | 3.5 | 3.5 | 3.5 | 3.5 | 3.5 | 3.5 |
| Sulfur | 2 | 2 | 2 | 2 | 2 | 2 |
| Other chemicals *12 | 2.2 | 2.2 | 2.2 | 2.2 | 2.2 | 2.2 |
| Foaming agent (1) *13 | 11.25 | 11.25 | - | - | - | - |
| Sodium bicarbonate | - | - | 5 | 15 | - | - |
| Magnesium sulfate | - | - | - | - | 5 | 15 |

| | | | | | | |
|---|---|---|---|---|---|---|
| **[0118]** *1 Butadiene rubber: "UBEPOL BR150L", manufactured by Ube Corporation. *2 Styrene-butadiene rubber: Solution polymerized SBR, "JSR HPR540", manufactured by JSR Corporation. *3 Carbon black: SAF grade carbon black, "Sho black N134", manufactured by Showa Cabot Corporation. *4 Liquid softener component: Contains at least an oil component. *5 Silica: Product name "Nipsil AQ", manufactured by Tosoh Silica Corporation. *6 Resin: C5 resin, "T-REZ RA100", manufactured by Tonen Chemical Corporation. *7 Hydrogenated resin: Hydrogenated C₅ resin, product name "Impera^{®} E1780" (Impera is a registered trade mark in Japan, other countries, or both) manufactured by Eastman, softening point = 130°C, weight-average molecular weight (Mw) = 909 g/mol, SP value = 8.35 (cal/cm³)^{1/2}. *8 Silane coupling agent: Bis(3-triethoxysilylpropyl)polysulfide, Shin-Etsu Chemical Corporation. *9 Anti-aging agent: Product name "Nocrac 6C" manufactured by Ouchi Shinko Chemical Industrial Corporation. *10 Sodium bicarbonate: "FE-507", manufactured by Eiwa Chemical Industrial Corporation. *11 Vulcanization accelerators: Total amount of CZ vulcanization accelerator and DM vulcanization accelerator. *12 Other chemicals: Additives other than those listed in the table. *13 Foaming agent (1): Total content of sodium bicarbonate and urea *14 Foaming agent (2): Total content of dinitrosopentamethylenetetramine (DPT) and urea. | | | | | | |

From the results in Table 1, it can be seen that the rubber compositions of Examples all had good results in terms of wear resistance and on-ice performance, and achieved both performance at a high level. On the other hand, the rubber compositions of Comparative Examples showed inferior overall evaluation values than those of the Examples, indicating that it is difficult to achieve both wear resistance and on-ice performance.

Also, it can be seen from the results in Tables 2 and 3 that all of the rubber compositions of Examples had good results in terms of on-ice performance. On the other hand, the rubber compositions of each Comparative Example showed inferior results in on-ice performance compared to each Example.

### INDUSTRIAL APPLICABILITY

According to the present disclosure, it is possible to provide a vulcanized rubber composition with excellent on-ice performance without degrading other performances such as wear resistance. In addition, according to this disclosure, it is also possible to provide a tire with excellent on-ice performance without degrading other performances such as wear resistance.

### REFERENCE SIGNS LIST

- 10: vulcanized rubber composition
- 20: pore

## Claims

1. A vulcanized rubber composition obtainable by vulcanizing a rubber composition comprising a rubber component and a resin component, wherein,
the rubber component contains an isoprene skeleton rubber and at least one selected from a styrene-butadiene rubber and a butadiene rubber,
the resin component has a softening point higher than 110 °C and a polystyrene-equivalent weight-average molecular weight of 200 to 1600 g/mol, and
having a plurality of pores.

2. The vulcanized rubber composition according to claim 1, wherein the rubber composition further comprises a filler containing at least carbon black.

3. The vulcanized rubber composition according to claim 2, wherein,
the filler further contains silica,
the content ratio of the silica to the total content of the silica and the carbon black is 20 % by mass or more.

4. The vulcanized rubber composition according to any one of claims 1 to 3, wherein the rubber composition further comprises a pore introducing agent.

5. The vulcanized rubber composition according to claim 4, wherein the pore introducing agent is at least one selected from the group consisting of a foaming agent, a metal sulfate, a heat-expandable microcapsule, a porous cellulose, and a lignin derivative.

6. The vulcanized rubber composition according to claim 4, wherein the pore introducing agent is an inorganic pore introducing agent.

7. The vulcanized rubber composition according to claim 6, wherein the inorganic pore introducing agent contains at least sodium bicarbonate.

8. The vulcanized rubber composition according to any one of claims 1 to 7, wherein the rubber composition further comprises composite fibers.

9. The vulcanized rubber composition according to any one of claims 1 to 8, wherein the vulcanized rubber composition has a pore ratio of 5 to 45 %.

10. The vulcanized rubber composition according to any one of claims 1 to 9, wherein the resin component contains at least hydrogenated C₅ resin.

11. A tire, wherein the vulcanized rubber composition according to any one of claims 1 to 10 is used for a tread portion.

12. The tire according to claim 11, wherein the tire is a passenger vehicle tire or a truck and bus tire.
